(19) Europäisches Patentamt
European Patent Office
Office européen des brevets

(11) **EP 3 721 179 B1**

(12) **EUROPÄISCHE PATENTSCHRIFT**

(45) Veröffentlichungstag und Bekanntmachung des Hinweises auf die Patenterteilung:
**10.11.2021 Patentblatt 2021/45**

(21) Anmeldenummer: **18803634.7**

(22) Anmeldetag: **13.11.2018**

(51) Int Cl.:
*G01F 1/84* (2006.01)     *G01N 11/16* (2006.01)
*G01N 9/00* (2006.01)     *G01F 15/02* (2006.01)

(86) Internationale Anmeldenummer:
**PCT/EP2018/081070**

(87) Internationale Veröffentlichungsnummer:
**WO 2019/110251 (13.06.2019 Gazette 2019/24)**

(54) **VERFAHREN ZUM BESTIMMEN DER VISKOSITÄT EINES MEDIUMS MITTELS EINES CORIOLIS-MASSEDURCHFLUSSMESSERS UND CORIOLIS-MASSEDURCHFLUSSMESSER ZUR DURCHFÜHRUNG DES VERFAHRENS**

METHOD FOR DETERMINING THE VISCOSITY OF A MEDIUM BY MEANS OF A CORIOLIS MASS FLOW METER AND CORIOLIS MASS FLOW METER FOR PERFORMING THE METHOD

PROCÉDÉ DE DÉTERMINATION DE LA VISCOSITE D'UN MILIEU AU MOYEN D'UN DÉBITMÈTRE MASSIQUE À EFFET CORIOLIS ET DÉBITMÈTRE MASSIQUE À EFFET CORIOLIS POUR LA MISE EN OEUVRE DE CE PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.12.2017 DE 102017129036**

(43) Veröffentlichungstag der Anmeldung:
**14.10.2020 Patentblatt 2020/42**

(73) Patentinhaber: **Endress+Hauser Flowtec AG**
**4153 Reinach (CH)**

(72) Erfinder:
• **ZHU, Hao**
**85354 Freising (DE)**

• **SCHÄFER, Bernd-Josef**
**72124 Pliezhausen (DE)**

(74) Vertreter: **Andres, Angelika Maria**
**Endress+Hauser Group Services**
**(Deutschland) AG+Co. KG**
**Colmarer Straße 6**
**79576 Weil am Rhein (DE)**

(56) Entgegenhaltungen:
EP-A1- 2 130 005     WO-A2-98/52000
DE-A1-102007 024 275     DE-A1-102009 012 474

## Beschreibung

Die vorliegende Erfindung betrifft ein Verfahren zum Bestimmen der Viskosität eines Mediums mittels eines Coriolis-Massedurchflussmessers und einen Coriolis-Massedurchflussmesser zur Durchführung des Verfahrens.

Gattungsgemäße Coriolis-Massedurchflussmesser umfassen gewöhnlich mindestens ein schwingfähig gelagertes Messrohr zum Führen eines Mediums zwischen einer einlaufseitigen Öffnung des Messrohrs und einer auslaufseitigen Öffnung des Messrohrs, mindestens einen Erreger zum Anregen von Biegeschwingungen des Messrohres in einer symmetrischen Biegeschwingungsnutzmode, wobei der Erreger bezogen auf eine Längsrichtung des Messrohrs symmetrisch, also in der Messrohrmitte angeordnet ist, mindestens einen einlaufseitigen Schwingungssensor und mindestens einen auslaufseitigen Schwingungssensor, wobei bezogen auf die Längsrichtung des Messrohrs die Positionen der einlaufseitigen und auslaufseitigen Schwingungssensoren symmetrisch zueinander angeordnet sind; und eine Betriebs- und Auswerteschaltung, die dazu eingerichtet ist, ein Erregersignal zum Treiben des Erregers auszugeben zum Anregen von Biegeschwingungen des Messrohres in einer symmetrischen Biegeschwingungsnutzmode, Zeitpunkte der Nulldurchgänge des Messrohrs an den Positionen eines einlaufseitigen Schwingungssensors und eines auslaufseitigen Schwingungssensors, anhand von Signalen des einlaufseitigen und des auslaufseitigen Schwingungssensors zu ermitteln, eine Phasenbeziehung bzw. einer Zeitverzögerung zwischen den Zeitpunkten der Nulldurchgänge der einlaufseitigen und auslaufseitigen Schwingungssensoren und des Zeitpunkts des Nulldurchgangs des Messrohrs in der Messrohrmitte zu ermitteln.

Die Signale der ein- und auslaufseitigen Schwingungssensoren weisen eine symmetrische Komponente auf, die der Biegeschwingungsnutzmode entspricht, und der eine durchflussabhängige, antisymmetrische Komponente überlagert ist. Es sind Coriolis-Massedurchflussmesser mit einem dritten, zentralen Schwingungssensor bekannt, wobei der zentrale Schwingungssensor bezogen auf eine Längsrichtung des Messrohrs symmetrisch angeordnet ist. Durch wiederholten Vergleich einer Phasenbeziehung zwischen den einlaufseitigen und auslaufseitigen Schwingungssensoren einerseits und Phasenbeziehung zwischen den Sensorsignalen jeweils eines dieser Schwingungssensoren mit den Sensorsignalen des zentralen Sensors lässt sich der Massedurchfussmesser auf Veränderungen in seinem für die Durchflussmessung relevanten Schwingungsverhalten überwachen. Dies ist unter anderem beschrieben in den Offenlegungsschriften DE 10 2007 024 275 A1 und WO 98 / 52 000 A2.

Neben dem Massedurchfluss können Coriolis-Massedurchflussmesser auch die Dichte und die Viskosität eines Mediums messen. Die Dichtemessung erfolgt gewöhnlich anhand einer Messung von Nutzmodeeigenfrequenzen. Die Viskosität ist über die Güte des einer Biegeschwingungsnutzmode zugänglich, beispielsweise über ein Verhältnis von Erregerleistung und Schwingungsamplitude. Präzise Amplitudenmessungen sind für jedoch Coriolis-Massedurchflussmessern eher artfremd, da die wesentlichen Messgrößen über Zeiten bzw. Frequenzen ermittelt werden. Es besteht daher Interesse an einer Viskositätsmessung, welche unabhängig von Amplitudenmessungen erfolgt.

Es ist daher die Aufgabe der vorliegenden Erfindung, ein solches Verfahren zur Viskositätsmessung mittels eines Coriolis-Massedurchflussmessers sowie einen Coriolis-Massedurchflussmesser zur Durchführung des Verfahrens anzugeben.

Die Aufgabe wird erfindungsgemäß gelöst durch das Verfahren gemäß dem unabhängigen Patentanspruch 1 und den Coriolis-Massedurchflussmesser gemäß dem unabhängigen Patentanspruch 7.

Das erfindungsgemäße Verfahren zum Bestimmen der Viskosität eines Mediums mittels eines Coriolis-Massedurchflussmessers umfasst:

> Anregen von Biegeschwingungen mindestens eines Messrohres des Massedurchflussmessers in einer symmetrischen Biegeschwingungsnutzmode mittels eines bezogen auf eine Längsrichtung des Messrohrs symmetrisch angeordneten Erregers, wobei das Messrohr zum Führen des Mediums zwischen einer Einlauföffnung und einer Auslauföffnung des Messrohrs dient;

> Erfassen von Sensorsignalen eines zentralen Schwingungssensors, wobei der zentrale Schwingungssensor bezogen auf eine Längsrichtung des Messrohrs symmetrisch angeordnet ist;

> Erfassen von Sensorsignalen eines einlaufseitigen Schwingungssensors und eines auslaufseitigen Schwingungssensors, wobei bezogen auf die Längsrichtung des Messrohrs die Positionen der einlaufseitigen und auslaufseitigen Schwingungssensoren symmetrisch zueinander angeordnet sind;

> Ermitteln einer Phasenbeziehung bzw. Zeitverzögerung zwischen den Sensorsignalen des zentralen Schwingungssensors und einer symmetrischen Funktion der Sensorsignale der einlaufseitigen und auslaufseitigen Schwingungssensoren.

Ermitteln der Viskosität des Mediums in Abhängigkeit von dieser Phasenbeziehung bzw. Zeitverzögerung.

In einer Weiterbildung der Erfindung umfasst das Ermitteln einer Phasenbeziehung bzw. Zeitverzögerung zwischen den Sensorsignalen des zentralen Schwingungssensors und einer symmetrischen Funktion der Sensorsignale der einlaufseitigen und auslaufseitigen Schwingungssensoren umfasst:

Ermitteln des Zeitpunkts des Nulldurchgangs des Messrohrs am Ort des Erregers mittels des zentralen Schwingungssensors;

Ermitteln der Zeitpunkte der Nulldurchgänge des Messrohrs an den Positionen des einlaufseitigen Schwingungssensors und des auslaufseitigen Schwingungssensors,

und Ermitteln einer Zeitverzögerung zwischen einem mittleren Zeitpunkt der Null der einlaufseitigen und auslaufseitigen Schwingungssensoren und des Zeitpunkts des Nulldurchgangs des Messrohrs in der Messrohrmitte.

Nulldurchgänge bezeichnen den Durchlauf eines jeweiligen Sensors durch seine Gleichgewichtslage. In diesem Punkt ist liegt die Schwingungsenergie der Messrohre im Wesentlichen vollständig in kinetischer Energie vor, so dass die geschwindigkeitsabhängigen Signale der elektrodynamischen Schwingungssensoren Maxima aufweisen.

In einer Weiterbildung der Erfindung wird die Viskosität als Funktion der Phasenbeziehung bzw. Zeitverzögerung berechnet, wobei die Funktion insbesondere ein Polynom umfasst. Die Berechnung mittels einer Funktion ist bevorzugt grundsätzlich können Viskositätswerte auch tabellarisch erfasst sein, so dass bestimmten Intervallen von Phasenbeziehungen bzw. Zeitverzögerungen jeweils ein Viskositätswert zugeordnet wird. Zwischen Tabellenwerten kann ggf. noch interpoliert werden.

In einer Weiterbildung der Erfindung weist die Phasenbeziehung bzw. Verzögerung eine Querempfindlichkeit zur Dichte des Mediums auf, wobei ein Dichtemesswert für das Medium anhand einer Schwingungsfrequenz der Biegeschwingungsnutzmode, insbesondere einer Nuzmodeeigenfrequenz bestimmt wird, und wobei diese Querempfindlichkeit beim Ermitteln der Viskosität berücksichtigt wird.

Hierzu kann beispielsweise eine Normierung der Zeitverzögerung mit einem Polynom in einer dichteabhängigen Periodendauer einer Biegeschwingungsnutzmode erfolgen, wobei dann die normierte Zeitverzögerung in die Viskositätsbestimmung eingeht.

In einer Weiterbildung der Erfindung wird auf Basis der Phasenbeziehung bzw. Verzögerung zunächst ein scheinbarer Massedurchflussmesswert berechnet wird, und wobei die Viskosität dann anhand des scheinbaren Massedurchflussmesswerts bestimmt wird.

In einer Weiterbildung der Erfindung wird die Viskosität bei einem Massedurchfluss von Null bestimmt.

Ein erfindungsgemäßer Coriolis-Massedurchflussmesser, insbesondere zum Durchführen des erfindungsgemäßen Verfahrens umfasst:

mindestens ein schwingfähig gelagertes Messrohr zum Führen eines Mediums zwischen einer einlaufseitigen Öffnung des Messrohrs und einer auslaufseitigen Öffnung des Messrohrs;

mindestens einen Erreger zum Anregen von Biegeschwingungen des Messrohres in einer symmetrischen Biegeschwingungsnutzmode, wobei der Erreger bezogen auf eine Längsrichtung des Messrohrs symmetrisch, also in der Messrohrmitte angeordnet ist;

mindestens einen zentralen Schwingungssensor, wobei der zentrale Schwingungssensor bezogen auf eine Längsrichtung des Messrohrs symmetrisch, also in der Messrohrmitte angeordnet ist;

mindestens einen einlaufseitigen Schwingungssensor und mindestens einen auslaufseitigen Schwingungssensor, wobei bezogen auf die Längsrichtung des Messrohrs die Positionen der einlaufseitigen und auslaufseitigen Schwingungssensoren symmetrisch zueinander angeordnet sind; und

eine Betriebs- und Auswerteschaltung, die eingerichtet ist zum:

Ausgeben eines Erregersignals zum Treiben des Erregers, zum Anregen von Biegeschwingungen des Messrohres in einer symmetrischen Biegeschwingungsnutzmode,

Erfassen von Sensorsignalen des zentralen Schwingungssensors,

Erfassen von Sensorsignalen des einlaufseitigen Schwingungssensors und des auslaufseitigen Schwingungssensors,

Ermitteln einer Phasenbeziehung bzw. Zeitverzögerung zwischen den Sensorsignalen eines zentralen Schwingungssensors und einer symmetrischen Funktion der Sensorsignale der einlaufseitigen und auslaufseitigen Schwingungssensoren, und

Ermitteln der Viskosität des Mediums in Abhängigkeit von dieser Phasenbeziehung bzw. Zeitverzögerung.

In einer Weiterbildung der Erfindung ist das mindestens eine Messrohr in seiner Ruhelage gebogen.

In einer Weiterbildung der Erfindung ist die Betriebs- und Auswerteschaltung dazu eingerichtet, einen Dichtemesswert für das Medium anhand einer Schwingungsfrequenz der Biegeschwingungsnutzmode, insbesondere einer Nutzmodeeigenfrequenz zu bestimmen, um eine Querempfindlichkeit der Phasenbeziehung bzw.

Verzögerung zur Dichte des Mediums beim Ermitteln der Viskosität zu berücksichtigen.

In einer Weiterbildung der Erfindung ist die Betriebs- und Auswerteschaltung dazu eingerichtet, auf Basis der Phasenbeziehung bzw. Verzögerung zunächst einen scheinbaren Massedurchflussmesswert zu berechnen, und die Viskosität dann anhand des scheinbaren Massedurchflussmesswerts zu bestimmen. Diese Vorgehensweise ist insofern vorteilhaft, als die Betriebs- und Auswerteschaltung primär dazu eingerichtet ist, Massedurchflussmesswerte zu berechnen. Es bietet sich daher an, die Phasenbeziehung bzw. Verzögerung zunächst auf einem vorhandenen Verarbeitungspfad in einen digital verfügbaren, scheinbaren Massedurchflussmesswert zu wandeln, der dann als Grundlage zur Bestimmung der Viskosität dient.

Die Erfindung wird nun anhand der in den Zeichnungen dargestellten Ausführungsbeispiele erläutert. Es zeigt:

Fig. 1: eine schematische Darstellung eines Ausführungsbeispiel eines erfindungsgemäßen Coriolis-Massedurchflussmessers;

Fig. 2: ein Diagramm der Viskosität als Funktion des scheinbaren Massedurchflusses; und

Fig. 3: ein Flussdiagramm eines Ausführungsbeispiels des erfindungsgemäßen Verfahrens.

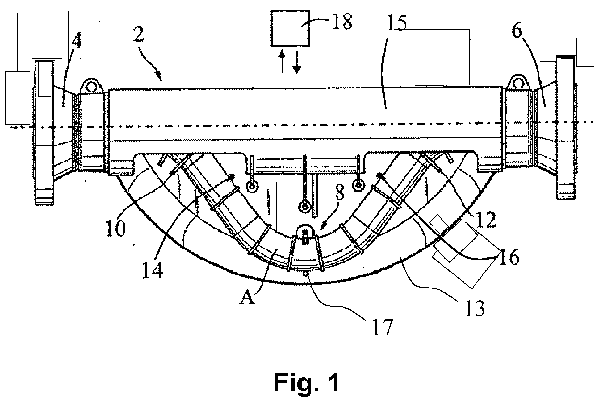

In Fig. 1 ist ein Ausführungsbeispiel eines erfindungsgemäßen Coriolis-Massedurchflussmessers 2 mit zwei in der Ruhelage gebogenen, parallelen Messrohren A dargestellt, von denen in der Zeichnung nur eines zu sehen ist. Der Coriolis-Massedurchflussmesser 2 ist in eine (nicht dargestellte) Rohrleitung einsetzbar, so dass die beiden Messrohre A von einem in der Rohrleitung strömenden Medium durchströmt werden können. Einlaufseitig und auslaufseitig der Messrohre A sind jeweils Strömungsteiler bzw. -sammler 4, 6 vorgesehen, die durch ein steifes Trägerrohr 15 miteinander verbunden sind. Die beiden Messrohre A einlaufseitig und auslaufseitig durch entsprechende Koppelelemente 10, 12 mechanisch gekoppelt, wodurch eine freie Schwingungslänge der Messrohre A zwischen den Koppelelementen 10, 12 definiert ist. Die Messrohre A weisen einen Bogen auf, der Außerhalb des Trägerohrs verläuft, und durch ein Schutzgehäuse 13, das mit dem Trägerrohr 15 verschweißt ist, vor Umgebungseinflüssen geschützt ist.

Zwischen den beiden Messrohren A ist ein elektrodynamischer Erreger 8 angeordnet. Der Erreger 8 ist bei der vorliegenden Ausführungsform an einem Scheitelpunkt der Messrohrbögen bezogen auf die Längsrichtung der Messrohre symmetrisch, also in der Messrohrmitte positioniert. Durch den Erreger 8 können die beiden Messrohre A periodisch gegeneinander ausgelenkt werden, so dass sie Biegeschwingungen ausführen.

Zwischen den beiden Messrohren A, jeweils an einem eingangsseitigen und an einem ausgangsseitigen Abschnitt derselben, erstrecken sich zwei elektrodynamische Schwingungssensoren 14, 16. Ein elektrodynamischer Schwingungssensor umfasst eine Tauchspule und einen Permanentmagneten. An einem Messrohr ist die Tauchspule angeordnet, und am gegenüberliegenden Messrohr der Permanentmagnet. Die durch die Messrohrschwingungen bewirkten Relativbewegungen von Spule und Magnet bewirken Änderungen des magnetischen Flusses am Ort der Spule und damit einhergehende Induktionsspannungen. D.h. durch die beiden Schwingungssensoren 14, 16 ist jeweils eine Abstandsänderung zwischen den beiden Messrohren A in Form von einem geschwindigkeitsproportionalen Spannungssignal erfassbar. Dabei handelt es sich zunächst jeweils um ein analoges Messsignal. Die Anregung des Erregers 8 durch Anlegen einer entsprechenden Anregungsspannung sowie die Bearbeitung und Auswertung der von den Schwingungssensoren 14, 16 bereitgestellten analogen Messsignale erfolgt durch eine entsprechend ausgebildete Betriebs- und Auswerteschaltung 18, die in Fig. 1 lediglich schematisch durch eine Box dargestellt ist.

Zur Ermittlung von Messwerten des Massedurchflusses $\dot{m}(t)$ ist eine Phasendifferenz $\Delta\varphi(t)$ der Schwingungen der beiden Messrohre A zwischen den zwei, durch die Schwingungssensoren 14, 16 gebildeten Messpunkten zu bestimmen. Aus dieser Phasendifferenz $\Delta\varphi(t)$ kann insbesondere, wie dem Fachmann bekannt ist, der Massedurchfluss des in der Rohrleitung strömenden Fluids bestimmt werden gemäß:

$$\dot{m}(t) := k \cdot \tan(\Delta\varphi(t) / 2) / (2\pi \cdot f),$$

wobei k eine für das jeweilige Messgerät spezifische Konstante ist, und f die aktuelle Schwingungsfrequenz der Messrohre beschreibt.

Zur Bestimmung einer Folge $\Delta\varphi_i, = \Delta\varphi(t_i)$ von diskreten Werten der Phasendifferenz $\Delta\varphi(t)$ wird durch die Betriebs- und Auswerteschaltung 18 aus von den Schwingungssensoren 14, 16 bereitgestellten analogen Messsignalen jeweils die Phaseninformation $\varphi_1(t_i)$, $\varphi_2(t_i)$ der Schwingung der beiden Messrohre A an den durch die beiden Schwingungssensoren 14, 16 gebildeten Messpunkten bestimmt. Hierzu können insbesondere die von den Schwingungssensoren 14, 16 jeweils bereitgestellten analogen Messsignale, die in der Regel durch eine den Relativgeschwindigkeiten der schwingenden Messrohre entsprechende Sensorspannung gebildet werden, mit einer hohen Abtastfrequenz, wie beispielsweise mit 40 kHz, abgetastet werden. Dadurch wird ein zeitdiskretes, eindimensionales Messsignal, das eine zeitliche Folge von Messwerten aufweist, erhalten. In der Regel werden die einzelnen Messwerte der Folge auch quantisiert, um eine digitale Verarbeitung zu ermöglichen. Ferner wird jedes Messsignal bei der vorliegenden Ausführungsform in ein analytisches Signal, bestehend aus einem Realteil R(ti) und einem Imaginärteil $I(t_i)$, ge-

wandelt. Hierzu können beispielsweise in bekannter Weise parallel zwei Filter, die einen Phasenunterschied von 90° aufweisen, eingesetzt werden. Weiterhin ist bei dem vorliegenden Ausführungsbeispiel vorgesehen, dass die Datenrate des analytischen Signals reduziert wird. Dies kann beispielsweise über entsprechende Dezimationsstufen erfolgen. Aus dem analytischen Signal kann, wie dem Fachmann geläufig ist, jeweils eine (zeitabhängige) Amplitudeninformation $A_1(t_i)$, $A_2(t_i)$ sowie eine (zeitabhängige) Phaseninformation $\varphi_1(t_i)$, $\varphi_2(t_i)$ der Schwingung der beiden Messrohre A an dem jeweiligen Messpunkt erhalten werden. Die Phasendifferenz $\Delta\varphi_i = \Delta\varphi(t_i)$ zwischen den beiden, durch die Schwingungssensoren 14, 16 gebildeten Messpunkten kann durch Bilden der Differenz der Phaseninformationen $\varphi_1(t_i)$, $\varphi_2(t_i)$ der von den beiden Schwingungssensoren 14, 16 erfassten Schwingungen erhalten werden. Da bei der vorliegenden Ausführungsform die Signalverarbeitung weitgehend digital erfolgt, sind die jeweiligen verarbeiteten Messsignale zeitdiskret, so dass gelegentlich auf konkrete Zeitpunkte $t_i$ Bezug genommen wird.

Durch die Betriebs- und Auswerteschaltung 18 werden in der Regel die Amplitudeninformation $A_1(t_i)$, $A_2(t_i)$ sowie die Phaseninformation $\varphi_1(t_i)$, $\varphi_2(t_i)$ ausgewertet. Insbesondere wird in Abhängigkeit von diesen Größen jeweils die Anregung der Messrohre A durch den Erreger 8 gesteuert.

Entsprechend kann anhand einer Nutzmodeeigenfrequenz f(t) eine Dichte des in den Messrohren des Messaufnehmers befindlichen Mediums bestimmt werden mit

$$\rho(t) = \rho(f(t)).$$

Der erfindungsgemäße Coriolis-Massedurchflussmesser 2 weist weiterhin einen zentralen elektrodynamischen Schwingungssensor 17 auf, der die Auslenkung der Messrohre A gegeneinander am Scheitelpunkt der Messrohrbögen also bezogen auf die die Längsrichtung der Messrohre symmetrisch erfasst. Der zentrale Schwingungssensor hat im Wesentlichen den gleichen Aufbau wie die einlaufseitigen und auslaufseitigen Schwingungssensoren. Dem entsprechend liefert auch der zentrale Schwingungssensor 17 ein geschwindigkeitsproportionales Spannungssignal. Dessen Phaseninformation $\varphi_z(t_i)$ durch die Betriebs- und Auswerteschaltung 18 entsprechend dem für die Signale der einlaufseitigen und auslaufseitigen Schwingungssensoren 14, 16 beschriebenen Verfahren gewonnen wird.

Die Betriebs- und Auswerteschaltung 18 ermittelt weiterhin eine Folge von zentralen Phasendifferenzwerten $\Delta\varphi_z(t_i)$ zwischen der Phase $\varphi_z(t_i)$ des zentralen Schwingungssensors und einer symmetrischen Funktion $S_{1,2}(\varphi_1(t_i), \varphi_2(t_i))$ der Phasen $\varphi_1(t_i)$, $\varphi_2(t_i)$ der Signale des einlaufseitigen und des auslaufseitigen Schwingungssensors 14, 16, also $\Delta\varphi_z(t_i) = \varphi_z(t_i) - S_{1,2}(\varphi_1(t_i), (p_2(t_i))$, wobei letztere Funktion beispielsweise das arithmetrische Mittel ihrer Argumente bildet, also $S_{1,2}(\varphi_1(t_i), \varphi_2(t_i)) := (\varphi_1(t_i), \varphi_2(t_i))/2$.

Auf Basis dieser zentralen Phasendifferenz $\Delta\varphi_z(t_i)$ kann die Betriebs- und Auswerteschaltung 18 als Zwischenschritt zur Viskositätsbestimmung einen scheinbaren Massedurchfluss berechnen gemäß $\dot{m}_s(t_i) := k \cdot \tan(\Delta\varphi_z(t_i)/2)/(2\pi \cdot f)$, wobei f die aktuelle Schwingungsfrequenz der angeregten Biegeschwingungsnutzmode ist. Selbstverständlich hat der scheinbare Massedurchfluss $\dot{m}_s(t_i)$ nichts mit dem tatsächlichen Massendurchfluss zu tun, da die die Argumente der Funktion $\Delta\varphi_z(t_i)$ von sämtlicher durchflussproportionalen, antisymmetrischen Anteilen befreit sind. Es kann jedoch je nach vorhanden Implementierung von Algorithmen zweckmäßig sein mit dem scheinbaren Massedurchfluss zu arbeiten, der im Wesentlichen proportional ist zum Quotienten aus der zentralen Phasendifferenz $\Delta\varphi_z(t_i)$ und der aktuellen Schwingungsfrequenz.

Insofern als die zentrale Phasendifferenz $\Delta\varphi_z(t_i)$ von der Viskosität eines in den Messrohren befindlichen Mediums abhängt, ist ein Ansatz gegeben, auf Basis eines aktuellen Werts der zentralen Phasendifferenz $\Delta\varphi_z(t_i)$ bzw. einem daraus abgeleiteten, scheinbaren Massedurchfluss $\dot{m}_s(t_i)$ einen Viskositätswert des Mediums zu ermitteln.

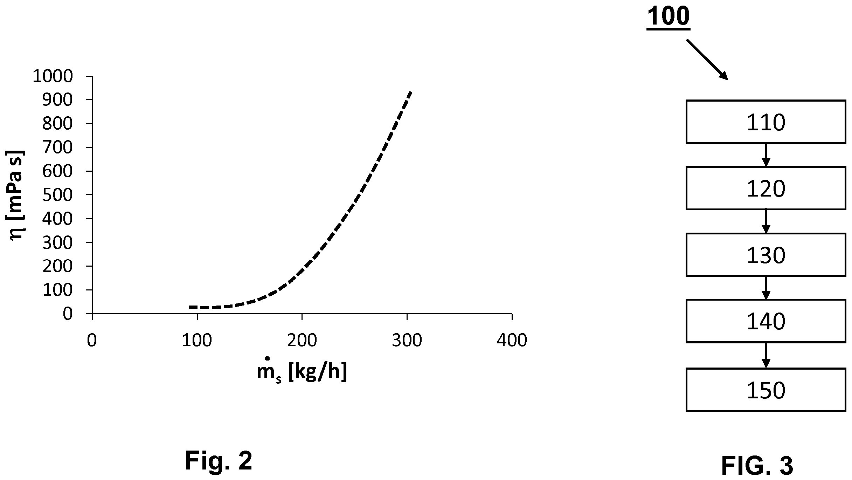

Für Mischungen aus Wasser und Glycerin wässrige Medien mit Medien mit Viskositäten zwischen 1 und 900 mPa s wurden scheinbare Massendurchflüsse $\dot{m}_s(\eta)$ von etwa 100 bis 300 kg/h gemessen. Auf Basis dieser Messungen wurde eine quadratische Funktion $\eta(\dot{m}_s)$ ist in der Betriebs- und Auswerteschaltung 18 implementiert, welche die dynamische Viskosität $\eta$ Funktion des scheinbaren Massedurchflusses berechnet. In Fig. 2 ist die implementierte Funktion schematisch dargestellt, mit welcher Viskositätswerte von der Betriebsund Auswerteschaltung berechnet und signalisiert werden können.

Fig. 3 zeigt zusammenfassend ein Ausführungsbeispiel des erfindungsgemäßen Verfahrens 100.

Das Verfahren beginnt mit dem Anregen von Biegeschwingungen 110 der Messrohre A des Paars von Messrohren des in Fig. 1 dargestellten Coriolis-Massedurchflussmessers 2 in einer symmetrischen Biegeschwingungsnutzmode mittels des in der Messrohrmitte angeordneten elektrodynamischen Erregers.

Es folgt das Erfassen 120 von Sensorsignalen des zentralen Schwingungssensors; sowie das

Erfassen 130 von Sensorsignalen des einlaufseitigen Schwingungssensors und eines auslaufseitigen Schwingungssensors.

Auf Basis der Sensorsignale folgt das Ermitteln 140 einer Phasenbeziehung bzw. Zeitverzögerung zwischen den Sensorsignalen des zentralen Schwingungssensors und einer symmetrischen Funktion der Sensorsignale der einlaufseitigen und auslaufseitigen Schwingungssensoren.

Dazu wird zunächst ein Mittelwert des Zeitpunkts der Nulldurchgänge das einlaufseitigen und auslaufseitigen Sensors als symmetrische Funktion der Sensorsignale gebildet, um dann die Differenz zwischen dem Zeitpunkt des Nulldurchgangs des zentralen Schwingungssensors und dem ermittelten Mittelwert zu berechnen. Gleichermaßen können zunächst jeweils die Differenzen zwischen dem Zeitpunkt des Nulldurchgangs des zentralen Sensors und dem Zeitpunkt des Nulldurchgangs des einlaufseitigen bzw. auslaufseitigen Sensors gebildet werden, worauf anschließend eine Mittelwertbildung folgt. Auch in diesem Fall erhält man als Ergebnis eine Zeitverzögerung zwischen den Sensorsignalen des zentralen Schwingungssensors und einer symmetrischen Funktion der Sensorsignale der einlaufseitigen und auslaufseitigen Schwingungssensoren.

Auf Basis der Zeitverzögerung wird in einem (optionalen) Schritt 145 ein scheinbarer Massedurchfluss ermittelt.

Auf Basis des scheinbaren Massedurchflusses erfolgt das Bestimmen 150 der Viskosität durch Berechnung mit der in Fig. 2 dargestellten quadratischen Funktion.

Der ermittelte Viskositätswert kann an eine übergeordnete Einheit signalisiert, auf eine Anzeigeeinheit dargestellt, und/oder zur Kompensation von Querempfindlichkeiten weiterer Messgrößengegenüber der Viskosität, beispielsweise einer Dichte herangezogen werden.

## Patentansprüche

1. Verfahren (100) zum Bestimmen der Viskosität eines Mediums mittels eines Coriolis-Massedurchflussmessers, umfassend:

   Anregen (110) von Biegeschwingungen mindestens eines Messrohres des Massedurchflussmessers in einer symmetrischen Biegeschwingungsnutzmode mittels eines bezogen auf eine Längsrichtung des Messrohrs symmetrisch angeordneten Erregers, wobei das Messrohr zum Führen des Mediums zwischen einer Einlauföffnung und einer Auslauföffnung des Messrohrs dient;
   Erfassen (120) von Sensorsignalen eines zentralen Schwingungssensors, wobei der zentrale Schwingungssensor bezogen auf eine Längsrichtung des Messrohrs symmetrisch angeordnet ist;
   Erfassen (130) von Sensorsignalen eines einlaufseitigen Schwingungssensors und eines auslaufseitigen Schwingungssensors, wobei bezogen auf die Längsrichtung des Messrohrs die Positionen der einlaufseitigen und auslaufseitigen Schwingungssensoren symmetrisch zueinander angeordnet sind;
   **gekennzeichnet durch**:

   Ermitteln (140) einer Phasenbeziehung bzw. Zeitverzögerung zwischen den Sensorsignalen des zentralen Schwingungssensors und einer symmetrischen Funktion der Sensorsignale der einlaufseitigen und auslaufseitigen Schwingungssensoren; und
   Ermitteln (150) der Viskosität des Mediums in Abhängigkeit von dieser Phasenbeziehung bzw. Zeitverzögerung.

2. Verfahren nach Anspruch 1, wobei das Ermitteln einer Phasenbeziehung bzw. Zeitverzögerung zwischen den Sensorsignalen des zentralen Schwingungssensors und einer symmetrischen Funktion der Sensorsignale der einlaufseitigen und auslaufseitigen Schwingungssensoren umfasst:

   Ermitteln des Zeitpunkts des Nulldurchgangs des Messrohrs am Ort des Erregers mittels des zentralen Schwingungssensors;
   Ermitteln der Zeitpunkte der Nulldurchgänge des Messrohrs an den Positionen des einlaufseitigen Schwingungssensors und des auslaufseitigen Schwingungssensors,
   und Ermitteln einer Zeitverzögerung zwischen einem mittleren Zeitpunkt der Nulldurchgänge der einlaufseitigen und auslaufseitigen Schwingungssensoren und des Zeitpunkts des Nulldurchgangs des Messrohrs in der Messrohrmitte.

3. Verfahren nach Anspruch 1 oder 2, wobei die Viskosität als Funktion der Phasenbeziehung bzw. Zeitverzögerung berechnet wird, wobei die Funktion insbesondere ein Polynom umfasst.

4. Verfahren nach einem der vorhergehenden Ansprüche, wobei die Phasenbeziehung bzw. Verzögerung eine Querempfindlichkeit zur Dichte des Mediums aufweist, wobei ein Dichtemesswert für das Medium anhand einer Schwingungsfrequenz der Biegeschwingungsnutzmode, insbesondere einer Nuzmodeeigenfrequenz bestimmt wird, und wobei diese Querempfindlichkeit beim Ermitteln der Viskosität berücksichtigt wird.

5. Verfahren nach einem der vorhergehenden Ansprüche, wobei auf Basis der Phasenbeziehung bzw. Verzögerung zunächst ein scheinbarer Massedurchflussmesswert berechnet wird, und wobei die Viskosität dann anhand des scheinbaren Massedurchflussmesswerts bestimmt wird.

6. Verfahren nach einem der vorhergehenden Ansprüche, wobei die Viskosität bei einem Massedurchfluss von Null bestimmt wird.

7. Coriolis-Massedurchflussmesser (2), insbesondere zum Durchführen eines Verfahrens nach einem der vorhergehenden Ansprüche, umfassend:

mindestens ein schwingfähig gelagertes Messrohr (A) zum Führen eines Mediums zwischen einer einlaufseitigen Öffnung des Messrohrs und einer auslaufseitigen Öffnung des Messrohrs;
mindestens einen Erreger (8) zum Anregen von Biegeschwingungen des Messrohres (A) in einer symmetrischen Biegeschwingungsnutzmode, wobei der Erreger bezogen auf eine Längsrichtung des Messrohrs symmetrisch, also in der Messrohrmitte angeordnet ist;
mindestens einen zentralen Schwingungssensor (17), wobei der zentrale Schwingungssensor bezogen auf eine Längsrichtung des Messrohrs symmetrisch, also in der Messrohrmitte angeordnet ist;
mindestens einen einlaufseitigen Schwingungssensor (14) und mindestens einen auslaufseitigen Schwingungssensor (16), wobei bezogen auf die Längsrichtung des Messrohrs die Positionen der einlaufseitigen und auslaufseitigen Schwingungssensoren symmetrisch zueinander angeordnet sind; und
eine Betriebs- und Auswerteschaltung (18), die eingerichtet ist zum:

Ausgeben eines Erregersignals zum Treiben des Erregers, zum Anregen von Biegeschwingungen des Messrohres in einer symmetrischen Biegeschwingungsnutzmode,
Erfassen von Sensorsignalen des zentralen Schwingungssensors,
Erfassen von Sensorsignalen des einlaufseitigen Schwingungssensors und des auslaufseitigen Schwingungssensors, **gekennzeichnet durch**:

Ermitteln einer Phasenbeziehung bzw. Zeitverzögerung zwischen den Sensorsignalen eines zentralen Schwingungssensors und einer symmetrischen Funktion der Sensorsignale der einlaufseitigen und auslaufseitigen Schwingungssensoren, und
Ermitteln der Viskosität des Mediums in Abhängigkeit von dieser Phasenbeziehung bzw. Zeitverzögerung.

8. Coriolis-Massedurchflussmesser nach Anspruch 7, wobei das mindestens eine Messrohr in seiner Ruhelage gebogen ist.

9. Coriolis-Massedurchflussmesser nach Anspruch 7 oder 8, wobei die Phasenbeziehung bzw. Verzögerung eine Querempfindlichkeit zur Dichte des Mediums aufweist,

wobei die Betriebs- und Auswerteschaltung dazu eingerichtet ist, einen Dichtemesswert für das Medium anhand einer Schwingungsfrequenz der Biegeschwingungsnutzmode, insbesondere einer Nutzmodeeigenfrequenz zu bestimmen, und
die Querempfindlichkeit beim Ermitteln der Viskosität zu berücksichtigen.

10. Coriolis-Massedurchflussmesser nach einem der Ansprüche 7 bis 9, wobei die Betriebs- und Auswerteschaltung dazu eingerichtet ist, auf Basis der Phasenbeziehung bzw. Verzögerung zunächst einen scheinbaren Massedurchflussmesswert zu berechnen, und die Viskosität dann anhand des scheinbaren Massedurchflussmesswerts zu bestimmen.

**Claims**

1. Procedure (100) for determining the viscosity of a medium using a Coriolis flowmeter, with said procedure comprising the following steps:

Generation (110) of flexural vibrations at least of a measuring tube of the mass flowmeter in a symmetrical flexural vibration useful mode using an exciter arranged symmetrically in relation to the longitudinal direction of the measuring tube, wherein the measuring tube is used to guide the medium between an inlet opening and an outlet opening of the measuring tube;
Measurement (120) of sensor signals of a central vibration sensor, wherein the central vibration sensor is arranged symmetrically in relation to a longitudinal direction of the measuring tube;
Measurement (130) of sensor signals of a vibration sensor on the inlet side and of a vibration sensor on the outlet side, wherein the positions of the vibration sensors on the inlet side and on the outlet side are arranged symmetrically vis-a-vis one another in relation to the longitudinal direction of the measuring tube;
**characterized by** the following steps:

Determination (140) of a phase relation or a time delay between the sensor signals of the central vibration sensor and a symmetrical function of the sensor signals of the vibration sensors on the inlet side and outlet side; and
Determination (150) of the viscosity of the medium depending on said phase relation or time delay.

**2.** Procedure as claimed in Claim 1, wherein the determination of a phase relation or a time delay between the sensor signals of the central vibration sensor and a symmetrical function of the sensor signals of the vibration sensors on the inlet side and outlet side comprises the following steps:

Determination of the time of zero crossing of the measuring tube at the location of the exciter using the central vibration sensor;

Determination of the times of the zero crossings of the measuring tube at the positions of the vibration sensor on the inlet side and the vibration sensor on the outlet side, and

Determination of a time delay between an average time of the zero crossings of the vibration sensors on the inlet side and the outlet side and the time of the zero crossing of the measuring tube in the center of the measuring tube.

**3.** Procedure as claimed in Claim 1 or 2, wherein the viscosity is calculated as a function of the phase relation or time delay, wherein the function particularly comprises a polynomial.

**4.** Procedure as claimed in one of the previous claims, wherein the phase relation or the delay has a cross-sensitivity to the density of the medium, wherein a density measured value for the medium is determined on the basis of a vibration frequency of the flexural vibration useful mode, particularly a useful mode natural frequency, and wherein said cross-sensitivity is taken into consideration when determining the viscosity.

**5.** Procedure as claimed in one of the previous claims,

wherein an apparent mass flow measured value is initially calculated on the basis of the phase relation or time delay, and

wherein the viscosity is then determined on the basis of the apparent mass flow measured value.

**6.** Procedure as claimed in one of the previous claims, wherein the viscosity is determined at a mass flow of zero.

**7.** Coriolis mass flowmeter (2), particularly designed to carry out a procedure as claimed in one of the previous claims, said flowmeter comprising:

at least one measuring tube (A) that is capable of vibrating, designed to guide a medium between an inlet-side opening of the measuring tube and an outlet-side opening of the measuring tube;

at least an exciter (8) designed to generate flexural vibrations of the measuring tube (A) in a symmetrical flexural vibration useful mode, the exciter being arranged symmetrically in relation to a longitudinal direction of the measuring tube, i.e. in the middle of the measuring tube;

at least a central vibration sensor (17), wherein the central vibration sensor is arranged symmetrically in relation to a longitudinal direction of the measuring tube, i.e. in the middle of the measuring tube;

at least a vibration sensor on the inlet side (14) and at least a vibration sensor on the outlet side (16), wherein the positions of the vibration sensors on the inlet side and outlet side are arranged symmetrically towards one another in relation to the longitudinal direction of the measuring tube; and

an operating and evaluation circuit (18), which is designed to:

output an excitation signal to drive the exciter, generate flexural vibrations of the measuring tube in a symmetrical flexural vibration useful mode,

measure sensor signals of the central vibration sensor,

measure sensor signals of the vibration sensor on the inlet side and of the vibration sensor on the outlet side,

**characterized by** the following steps:

Determination of a phase relation or a time delay between the sensor signals of a central vibration sensor and of a symmetrical function of the sensor signals of the vibration sensors on the inlet side and outlet side, and

Determination of the viscosity of the medium depending on this phase relation or time delay.

**8.** Coriolis mass flowmeter as claimed in Claim 7, wherein the at least one measuring tube is curved in its rest position.

**9.** Coriolis mass flowmeter as claimed in Claim 7 or 8, wherein the phase relation or the time delay has a cross-sensitivity to the density of the medium, wherein the operating and evaluation circuit is designed to determine a density measured value for the medium on the basis of a vibration frequency of the flexural vibration useful mode, particularly a useful mode natural frequency, and to take the cross-sensitivity into consideration when determining the viscosity.

**10.** Coriolis mass flowmeter as claimed in one of the Claims 7 to 9, wherein the operating and evaluation circuit is designed to initially calculate an apparent mass flow measured value on the basis of the phase relation or time delay, and to then determine the viscosity on the basis of the apparent mass flow measured value.

## Revendications

1.   Procédé (100) destiné à la détermination de la viscosité d'un produit au moyen d'un débitmètre Coriolis, lequel procédé comprend les étapes suivantes :

Génération (110) des vibrations de flexion d'au moins un tube de mesure du débitmètre massique dans un mode utile de vibration de flexion symétrique au moyen d'un excitateur disposé symétriquement par rapport à une direction longitudinale du tube de mesure, le tube de mesure servant à guider le produit entre une ouverture d'entrée et une ouverture de sortie du tube de mesure ;
Mesure (120) des signaux d'un capteur de vibration central, le capteur de vibration central étant disposé symétriquement par rapport à une direction longitudinale du tube de mesure ;
Mesure (130) des signaux d'un capteur de vibration côté entrée et d'un capteur de vibration côté sortie, les positions des capteurs de vibration côté entrée et côté sortie étant disposées symétriquement par rapport à la direction longitudinale du tube de mesure ;
**caractérisé par** les étapes suivantes :

Détermination (140) d'une relation de phase ou d'un retard entre les signaux du capteur de vibration central et d'une fonction symétrique des signaux des capteurs de vibration côté entrée et côté sortie ; et
Détermination (150) de la viscosité du produit en fonction de ladite relation de phase ou dudit retard.

2.   Procédé selon la revendication 1, pour lequel la détermination d'une relation de phase ou d'un retard entre les signaux du capteur de vibration central et d'une fonction symétrique des signaux des capteurs de vibration côté entrée et côté sortie comprend les étapes suivantes :

Détermination de l'instant du passage par zéro du tube de mesure à l'emplacement de l'excitateur au moyen du capteur central de vibration ;
Détermination des instants des passages par zéro du tube de mesure aux positions du capteur de vibration côté entrée et du capteur de vibration côté sortie, et
Détermination d'un retard entre un instant moyen des passages par zéro des capteurs de vibration côté entrée et côté sortie et l'instant du passage par zéro du tube de mesure au centre du tube de mesure.

3.   Procédé selon la revendication 1 ou 2, pour lequel la viscosité est calculée en fonction de la relation de phase ou du retard, ladite fonction comprenant notamment un polynôme.

4.   Procédé selon l'une des revendications précédentes, pour lequel la relation de phase ou le retard présente une sensibilité croisée à la densité du produit, une valeur mesurée de la densité du produit étant déterminée sur la base d'une fréquence de vibration du mode utile de vibration de flexion, notamment une fréquence naturelle du mode utile, et cette sensibilité croisée étant prise en compte lors de la détermination de la viscosité.

5.   Procédé selon l'une des revendications précédentes,

pour lequel une mesure de débit massique apparent est d'abord calculée sur la base de la relation de phase ou du retard, et
pour lequel la viscosité est ensuite déterminée sur la base de la mesure de débit massique apparent.

6.   Procédé selon l'une des revendications précédentes, pour lequel la viscosité est déterminée à un débit massique nul.

7.   Débitmètre massique Coriolis (2), notamment destiné à la réalisation d'un procédé selon l'une des revendications précédentes, lequel débitmètre comprend :

au moins un tube de mesure (A) apte à vibrer, destiné à guider un produit entre une ouverture côté entrée du tube de mesure et une ouverture côté sortie du tube de mesure ;au moins un excitateur (8) destiné à générer des vibrations de flexion du tube de mesure (A) dans un mode utile de vibration de flexion symétrique, l'excitateur étant disposé symétriquement par rapport à une direction longitudinale du tube de mesure, c'est-à-dire au centre du tube de mesure ;
au moins un capteur de vibration central (17), le capteur de vibration central étant disposé symétriquement par rapport à une direction longitudinale du tube de mesure, c'est-à-dire au centre du tube de mesure ;
au moins un capteur de vibration côté entrée (14) et au moins un capteur de vibration côté sortie (16), les positions des capteurs de vibration côté entrée et côté sortie étant disposées symétriquement l'une à l'autre par rapport à la direction longitudinale du tube de mesure ; et un circuit de commande et d'exploitation (18), lequel est conçu pour :

délivrer un signal d'excitation pour commander l'excitateur, générer les vibrations de flexion du tube de mesure dans un mode utile de vibration de flexion symétrique, mesurer les signaux du capteur de vibration central, mesurer les signaux du capteur de vibration côté entrée et du capteur de vibration côté sortie,

**caractérisé par** les étapes suivantes :

Détermination d'une relation de phase ou d'un retard entre les signaux d'un capteur de vibration central et d'une fonction symétrique des signaux des capteurs de vibration côté entrée et côté sortie, et Détermination de la viscosité du produit en fonction de cette relation de phase ou de ce retard.

8. Débitmètre massique Coriolis selon la revendication 7, pour lequel l'au moins un tube de mesure est courbé dans sa position de repos.

9. Débitmètre massique Coriolis selon la revendication 7 ou 8, pour lequel la relation de phase ou le retard présente une sensibilité croisée à la densité du produit, le circuit de commande et d'exploitation étant conçu pour déterminer une valeur mesurée de densité pour le produit sur la base d'une fréquence de vibration du mode utile de vibration de flexion, notamment une fréquence naturelle du mode utile, et pour prendre en compte la sensibilité croisée lors de la détermination de la viscosité.

10. Débitmètre massique Coriolis selon l'une des revendications 7 à 9, pour lequel le circuit de commande et d'exploitation est conçu pour calculer dans un premier temps une valeur mesurée de débit massique apparent sur la base de la relation de phase ou du retard, puis pour déterminer la viscosité sur la base de la valeur mesurée de débit massique apparent.

Fig. 1

FIG. 3

Fig. 2

**IN DER BESCHREIBUNG AUFGEFÜHRTE DOKUMENTE**

**In der Beschreibung aufgeführte Patentdokumente**

- DE 102007024275 A1
- WO 9852000 A2